# EUROPEAN PATENT APPLICATION

(11) **EP 2 101 469 A1**
(43) Date of publication of application: **16.09.2009**
(21) Application number: 09003390.3
(22) Date of filing: 09.03.2009
(51) Int. Cl.: H04L 29/06, H04M 1/2745

(54) **Method for linkage of telecommunications by means of digital maps**

(30) Priority: 10.03.2008 CN 200810050453
(71) Applicant: Ko, Wen-Shen, Taipei City 100 (TW)
(72) Inventor: Ko, Wen-Shen, Taipei City 100 (TW)
(74) Representative: Becker, Eberhard

(57) **Abstract**

A method of the present invention enables every object on a digital map to be set with qualitative attributes comprised of geographical and descriptive properties and data of telecommunications. When browsing through the digital map to query for a designated object on an electronic (such as a computer, PDA, or mobile phone), the resulted digital map of location and corresponding qualitative attributes as well as data of telecommunication of the designated object are displayed on the screen of the electronic device. By simply selecting (clicking or double clicking) the data of telecommunications of the designated object, the modem circuits and related driving mechanisms of the electronic device are actuated to establish connections to the telephone system or the internet system enabling telecommunications through the telephone numbers, the homepages or the internet instant messengers (such as MSN, ICQ, Skype and the like) of the object for further immediate and direct contact.

## Description

### BACKGROUND OF THE INVENTION

### (a) Field of the Invention

The present invention relates to a method for linkage of telecommunications by means of digital maps 10. More precisely, the data of telecommunications consisting of the telephone numbers, the websites and the internet protocol (IP) addresses of a designated location 11 on a digital map 10 displayed on an electronic device 12 are selected (clicked or double clicked) enabling connections from the electronic device 12 to the telephone system and the internet system. The telephones, the homepages or the internet instant messengers (such as MSN, ICQ, Skype and the like) of the designated location 11 are actuated for immediate and direct contact.

### (b) Description of the Prior Art

Since the development of the digitalization of atlas, there has been a trend for people to search for a designated object on digital maps via a computer. Since digital maps are able to display the location of a queried object and the related road system to the object, it is convenient for a user to query a certain object on digital maps and plan a path to the location of the object in advance before travel.

Up to the present time, there are many internet service providers provide digital map services through the internet, such as the Google® map, the Yahoo® map, the MSN® map and the Urmap®. When a digital map service is used to search for an object, the name or the address of the object is usually put into the querying system of the service first by the user. Thereafter the digital map service searches thoroughly the database of the digitalized atlas to fetch the digital map and information corresponding to the object. The result is finally displayed on the computer screen for the user to read. By means of the digital map service, the user obtains geographical information such as longitude, latitude and address of location as well as descriptive properties such as pictorial profiles, brief introductions and data of telecommunications related to the queried object.

However, the digital map services can only provide the geographical information and the related descriptive properties of the queried object for user reference. If further enquiry and direct contact with the object is required, the user has to first note down the provided data of telecommunications (telephone numbers, websites or IP addresses). Thereafter a phone call to the object or access to the homepages of the object can be made separately.

Since the prior art is not convenient enough for usage, it will be extremely helpful if further linkage of telecommunications with the designated object can be directly implemented without the separate note-down step while the digital map service is used.

### SUMMARY OF THE INVENTION

In the light of the shortcomings of the aforementioned prior art, the inventor of the present invention, having accumulated knowledge and manufacturing experience of a diverse range of electronic products, has attentively researched various methods to resolve the shortcomings. The continuous effort and the following improvements have been culminated in the design of a completely new method for actualizing linkage of telecommunications by means of digital maps.

The objective of the present invention is to provide a method for direct linkage of telecommunications by means of digital maps. More specifically, when a digital map is browsed through for a designated object such as a government office, a hospital, a parking lot or a restaurant, the resulted geographical and descriptive information corresponding to the object are displayed on the computer screen for user reference. Let the descriptive information of the designated object contains the data of telecommunications consisting of the telephone numbers, the websites and the internet protocol (IP) addresses as properties. By simply selecting (clicking or double clicking) a property of the displayed data of telecommunications, the modem circuits and related driving mechanisms of the computer are actuated to enable connections from the computer to the telephone system or the internet system. Further enquiry and direct contact with the designated object can be made by making telephone calls, browsing the homepages or using the internet instant messengers (such as MSN, ICQ, Skype and the like).

According to the aforementioned objective, the method of the present invention enables every object on a digital map to be set with a group of qualitative attributes containing longitude, latitude and address as the geographical properties of location and telephone numbers, websites and IP addresses as the data of telecommunications.

When the digital map service is used to browse through and search for a designated object via an electronic device or a computer, usually name of the object is put into the query process of the service first. A data-mining process is then executed to get the location of the object displayed on the digital map. Along with the geographical properties of the location, the descriptive information corresponding to the object is also displayed on the screen of the electronic device. Since the descriptive information consists of a group of data of telecommunications, the modem circuits and related driving mechanisms of the electronic device will be actuated automatically when the user selects (clicks or double clicks) the data of telecommunications. Accordingly, connections from the electronic device to the telephone system or the internet system are established enabling the telephone numbers to be dialed, the homepages to be browsed or the internet instant messengers (such as MSN, ICQ, Skype and the like) to be implemented. Hence, the user is able to have direct contact with the designated object immediately to inquire more information, thereby achieving the linkage of telecommunications by means of digital maps.

To enable a further understanding of said objectives and the technological methods of the invention herein, a brief description of the drawings is provided below followed by a detailed description of the preferred embodiments.

### BRIEF DESCRIPTION OF THE DRAWINGS

FIG. 1 is an external appearance of a general notebook computer according to the present invention.
FIG. 2 is a schematic view of a digital map displayed on a computer screen according to the present invention.
FIG. 3 is a flow chart depicting operational method according to the present invention.

### DETAILED DESCRIPTION OF THE PREFERRED EMBODIMENTS

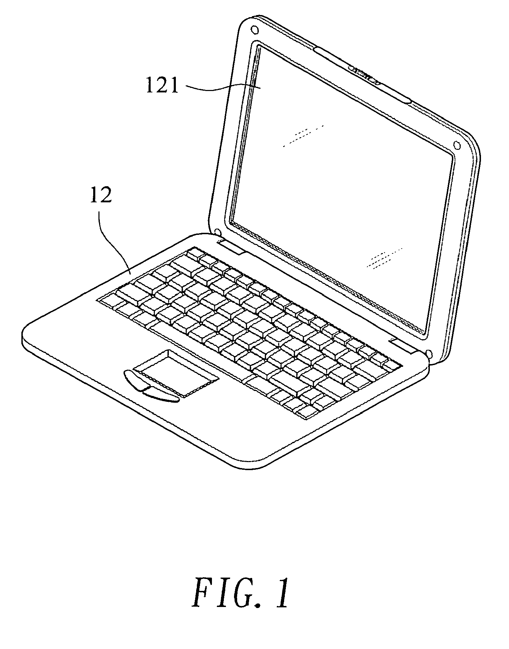

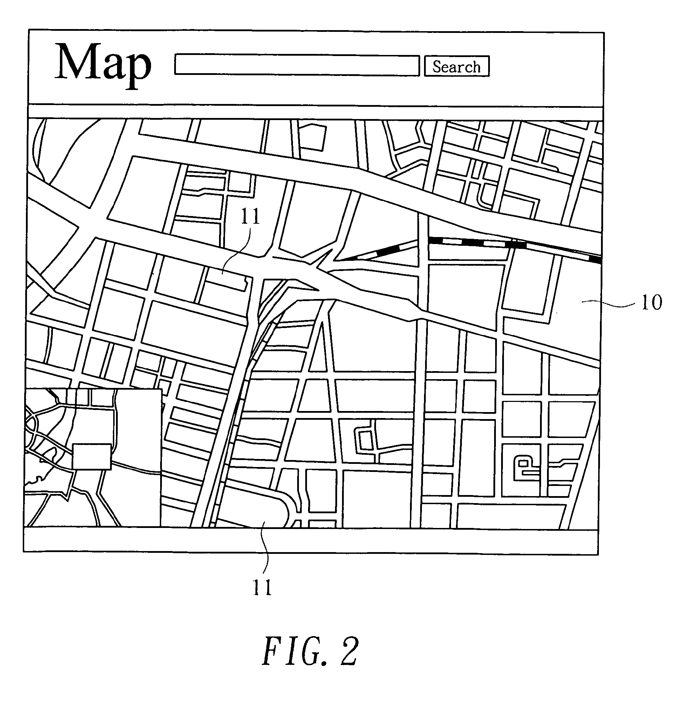

The present invention relates to a method for linkage of telecommunications by means of digital maps. Referring to FIG. 1 and FIG. 2, wherein the method of the present invention sets every object 11 (such as a hotel, a restaurant, a hospital, a school, a government office, a gas station, a parking lot, a company, a movable identity and the like) on a digital map 10 with a group of qualitative attributes consisting of geographical properties (latitude, longitude and address of location) and descriptive properties (pictorial profiles, introductions of business contents and data of telecommunications). The data of telecommunications contains telephone numbers, websites and interent protocol (IP) addresses. Since a digital map is mathematically constructed by a graph and a database with records and fields, searching for an object on the digital map is equivalent to path-planning on the graph and data-mining on the database, and is calculable by computers.

When the digital map is used to browse through for a designated object 11 via an electronic device 12 such as a desktop computer, a notebook computer, a netbook computer, a PDA (Personal Digital Assistant) or a mobile phone, name of the object is put into the query process of the service first. A path-planning and data-mining process is then executed to find out the location with qualitative attributes (records and fields) corresponding to the object. The result is finally displayed in the form of a digital map on the screen 121 of the electronic device 12 for user reference.

Given a list of data of telecommunications to the qualitative attributes of the object 11 as properties, the invented method for linkage of telecommunications is thus introduced for direct and immediate contact from the user to the designated object 11. By simply selecting (clicking or double clicking) the data of telecommunications, the modem circuits and related driving mechanisms of the electronic device 12 are actuated to establish connections to the telephone system or the internet system. As a result, telecommunications with the designated object 11 can be implemented immediately through the telephone numbers, the homepages and the internet instant messengers (such as MSN, ICQ, Skype and the like) for further direct contact.

In the present invention, the linkage of telecommunications with the designated object 11 is implemen ted using the modem circuits and related driving mechanisms of the electronic device 12 by wired or wireless means.

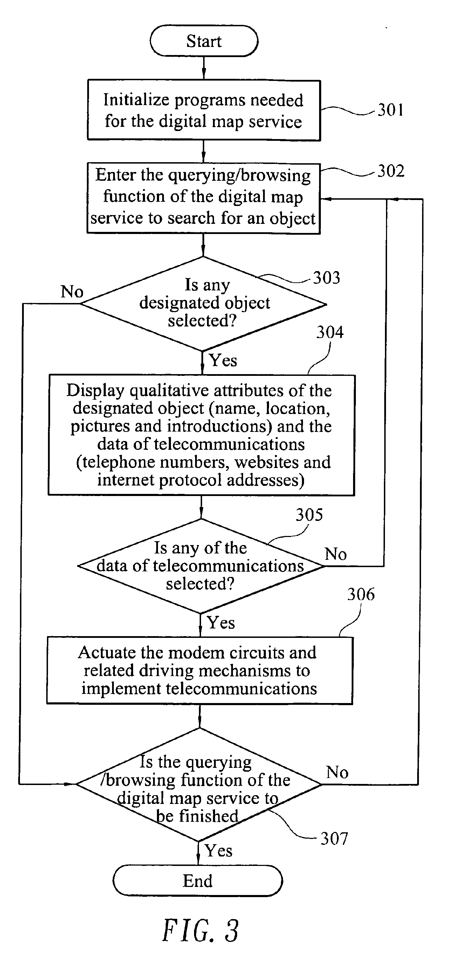

Referring to FIG. 3, when the digital map service is activated, the following processing steps are implemented:
(301) Initializing the programs needed for the digital map service;
(302) Searching the database of the digital map to result and display the corresponding digital map 10 of the location and the qualitative attributes with the data of telecommunications of the designated object 11 on the screen 121 of the electronic device 12;
(303) Determining whether the designated object 11 on the digital map 10 is selected or not; if yes continues to implement the following step (304), otherwise goes to step (307);
(304) Displaying the qualitative attributes of the designated object 11, (name, latitude and longitude, address, pictorial profiles and business contents) and the data of telecommunications (telephone numbers, websites and internet protocol addresses);
(305) Determining whether the displayed data of telecommunications of the object is selected (clicked or double clicked) or not; if yes continues to implement the following step (306), otherwise goes to step (302);
(306) Actuating the modem circuits and related driving mechanisms of the electronic device 12 to enable linkage of telecommunications with the designated object 11 by the telephone system and the internet system;
(307) Determining whether the querying and browsing process of the digital map service is to be finished or not, if yes concludes the operations; otherwise goes to step (302).

In conclusion, the method for linkage of telecommunications by means of digital maps of the present invention assuredly provides a practical and practicable function with an innovative structure not found in the prior art. Moreover, no similar products have been seen in the market or in any publications that the present invention provides undoubted originality. The present invention clearly complies with the essential elements required for a new patent application. Accordingly, a new patent application is proposed herein.

It is of course to be understood that the embodiments described herein are merely of illustrative of the principles of the invention. A wide variety of modifications thereto may be carried out by persons skilled in the art without departing from the fundamentals of the invention as set forth in the following claims.

## Claims

1. A method for linkage of telecommunications by means of digital maps, wherein objects 11 on a digital map 10 are set with qualitative attributes comprised of a group of geographical and descriptive properties,
whereby, when browsing through the digital map 10 to query a designated object 11 the resulted location, introductions and data of telecommunications corresponding to the object are displayed on the screen 121 of the electronic device 12;
accordingly, when selecting the data of telecommunications of the designated object 11 the modem circuits and related driving mechanisms of the electronic device 12 are actuated to establish linkage of telecommunications with the object 11 through the telephone system or the internet system.

2. The method for linkage of telecommunications by means of digital maps according to claim 1, wherein the geographical properties of an object 11 comprise latitude, longitude and address defining the location of the object 11.

3. The method for linkage of telecommunications by means of digital maps according to claim 1, wherein the descriptive properties of an object 11 are made up of pictorial profiles, brief introductions of business contents and data of telecommunications.

4. The method for linkage of telecommunications by means of digital maps according to claim 1, wherein the linkage of telecommunications between the electronic device 12 and the designated object 11 is implemented by wired or wireless means.

5. The method for linkage of telecommunications by means of digital maps according to claim 1, wherein the objects are buildings or locations set with qualitative attributes by the digital map 10 service providers, such as hotels, restaurants, gas stations, parking lots, amusement parks, companies, schools, hospitals, libraries, government offices or scenic areas.

6. The method for linkage of telecommunications by means of digital maps according to claim 1, wherein the objects 11 can also be movable identities such as personnel and vehicle fleet.

7. The method for linkage of telecommunications by means of digital maps according to claim 1, wherein the data of telecommunications of the object 11 consists of the telephone numbers, the websites and the IP addresses.

8. The method for linkage of telecommunications by means of digital maps according to claim 1, wherein connections to the telephone system or the internet system are established to make telephone calls, access to the homepages or use the internet instant messengers such as MSN, ICQ, Skype and the like.
